## Europäisches Patentamt
### European Patent Office
### Office européen des brevets

(19)

(11) Veröffentlichungsnummer: **0 046 579**
A1

(12)

# EUROPÄISCHE PATENTANMELDUNG

(21) Anmeldenummer: 81106495.5

(22) Anmeldetag: 21.08.81

(51) Int. Cl.³: **B 44 F 9/00**
B 29 F 3/12, B 44 F 9/02

(30) Priorität: 22.08.80 DE 3031795

(43) Veröffentlichungstag der Anmeldung:
03.03.82 Patentblatt 82/9

(84) Benannte Vertragsstaaten:
DE FR GB NL

(71) Anmelder: WACKER-CHEMIE GMBH
Prinzregentenstrasse 22
D-8000 München 22(DE)

(72) Erfinder: Adler, Klaus, Dr., Dipl.-Ing.
Lindenweg 13
D-8263 Burghausen(DE)

(72) Erfinder: Gerhardinger, Dieter, Ing. grad.
In den Grüben 125
D-8263 Burghausen(DE)

(72) Erfinder: Bauer, Johann, Dr., Dipl.-Chem.
Görresstrasse 3
D-8263 Burghausen(DE)

(54) Verfahren zur Erzielung von Maserungseffekten in Formteilen aus Polymermaterial.

(57) Die Erfindung betrifft ein Verfahren zur Erzielung von Maserungseffekten in Formteilen, die zum überwiegenden Teil aus Polyvinylchlorid und zum geringeren Teil aus den Maserungseffekt erzeugendem Polymerisat bestehen, welches ausgewählt ist aus der Gruppe des chlorierten Polyethylens, des Nitrilkautschuks, des Ethylen-Vinylacetat-Copolymers, sowie des Pfropfpolymerisats des Vinylchlorids auf Ethylen-Vinylacetat-Copolymer.

EP 0 046 579 A1

WACKER - CHEMIE
GMBH

München, den 29.7. 1980

LC-Pat
Dr.Ra/ve


Wa 7929 - V
===========


Verfahren zur Erzielung von Maserungseffekten in Formteilen
aus Polymermaterial

---

Die Erfindung betrifft ein Verfahren zur Erzielung von Maserungseffekten in Formteilen aus Polymermaterial, wobei eine Mischung von Polyvinylchlorid als Basismaterial und, den Maserungseffekt erzeugendem Polymerisat geformt wird.

Formteile aus Polymermaterial werden in einer Reihe von Anwendungsgebieten zur optischen Angleichung an Naturstoffe wie beispielsweise Holz mit entsprechenden Maserungseffekten versehen.

Es sind bereits Verfahren zur Erzielung von Maserungseffekten in plastifizierbarem Polymermaterial bekannt geworden:

Nach DE-PS 11 46 648 werden mit Maserungen ausgestattete Formstücke unter Anwendung von Schneckenpressen mit mehrgängigen Förderspindeln erhalten, wobei die einzelnen Schneckengänge mit unterschiedlich gefärbtem Material beschickt werden.

Weiterhin werden gemäß DE-PS 11 70 616 Farbeffekte an Profilstücken aus Kunststoff dadurch erzielt, daß die pigmentführende Komponente kurz vor dem Austritt aus der Düsenöffnung einer Schneckenpresse auf das Grundmaterial aufgeschmolzen wird.

Die oben genannten Verfahren erfordern jedoch nachteiligerweise spezielle Vorrichtungen und umständliche Zudosierungsprozeduren für die pigmenttragende Komponente.

Ferner wird in DE-OS 19 63 161 ein Farbgranulat aus PVC als Grundmasse und weichmacherhaltigem, pigmentiertem Polyvinylchlorid vorgestellt, das durch Extrudieren oder Spritzgießen zu Maserungen aufweisenden Formteilen verarbeitet werden kann.

Die Verwendung derartiger PVC-Weichmachergemische führt jedoch, insbesondere bei höherem Anteil an Farbgranulat, wie es andererseits zur Erzielung dunklerer Farbtöne erfoderlich ist, oft zur Versprödung des Fertigteils – die Formkörper werden mithin gegen Schlagbeanspruchung empfindlich.

Aufgabe der Erfindung war es nun, ein Verfahren zur Erzielung von Maserungseffekten in Formteilen aus Polymermaterial vorzustellen, zu dessen Durchführung keine speziellere Maschinenausstattung erforderlich ist und wobei Formteile erhalten werden können, die gerade im kritischen Bereich von etwa 1 bis $10$ Prozent an, den Maserungseffekt erzeugender Komponente, nicht, die sonst immer beobachtete "Sprödigkeitsmulde" aufweisen.

Es wurde nun gefunden, daß Formteile aus Polyvinylchlorid als Basismaterial und, den Maserungseffekt erzeugenden Beimengungen aus einer Auswahl von Polymermaterial, die chloriertes Polyethylen, Nitrilkautschuk, Ethylen-Vinylacetat-Copolymer sowie Pfropfpolymerisat von Vinylchlorid auf Ethylen-Vinylacetat-Copolymer umfaßt, der obengenannten Aufgabenstellung
gerecht werden.

Es sind zwar bereits beispielsweise gemäß DE-AS 14 94 127
thermoplastische Massen bekannt geworden auf Basis von Polyvinylchlorid und Ethylen-Vinylacetat, die geringe Schlagempfindlichkeit aufweisen. Es handelt sich hierbei jedoch
stets um homogene Mischungen. Zur Erzielung eines Maserungseffektes müssen im Gegensatz dazu naturgemäß inhomogene Mischungen eingesetzt werden. Überraschenderweise zeigen Formkörper aus erfindungsgemäßen Mischungen trotz Inhomogenität
keine, die Schlagbeanspruchung beeinträchtigende Sprödigkeit.

Gegenstand der Erfindung ist somit ein Verfahren zur Erzielung
von Maserungseffekten in Formteilen aus Polymermaterial, wobei eine Mischung aus Polyvinylchlorid als Basismaterial und,
den Maserungseffekt erzeugendem Polymerisat geformt wird, das
dadurch gekennzeichnet ist, daß als den Maserungseffekt erzeugendes Polymerisat eine Auswahl an Polymerisaten eingesetzt
wird, die chloriertes Polyethylen, Nitrilkautschuk, Ethylen-
Vinylacetat-Copolymer, sowie Pfropfpolymerisat von Vinylchlorid auf Ethylen-Vinylacetat-Copolymer umfaßt.

Es ist bevorzugt, als den Maserungseffekt erzeugendes Polymerisat Ethylen-Vinylacetat-Copolymer mit 10 - 90 Gew.% Anteil
an Vinylacetat-Struktureinheiten einzusetzen.

Ferner sind Gegenstand der Erfindung inhomogene Mischungen
von teilchenförmigem Polyvinylchlorid mit dazu farblich kontrastierendem, teilchenförmigem Polymerisat, das eine Auswahl
umfaßt aus der Gruppe des chlorierten Polyethylens, des Nitrilkautschuks, des Ethylen-Vinylacetat-Copolymers, sowie des
Pfropfpolymerisats des Vinylchlorids auf Ethylen-Vinylacetat-
Copolymer.

Erfindungsgemäß wird das als Basismaterial einzusetzende Polyvinylchlorid in Form von Pulvern oder Granulaten verwendet. Es
können handelsübliche Produkte eingesetzt werden.

Typische Zusammensetzungen sind:

100 Gewichtsteile Polyvinylchlorid
2 bis 10 Gewichtsteile Stabilisator
0,5 bis 5 Gewichtsteile Verarbeitungshilfsstoffe
0 bis 15 Gewichtsteile Füllstoffe
0 bis 10 Gewichtsteile Farben und Pigmente

Die Herstellung der oben genannten Zusammensetzung kann nach
Verfahren erfolgen, die auch bereits bisher hierfür üblich
waren, beispielsweise durch einfaches Mischen der Komponenten
in der gewünschten Zusammensetzung in Vorrichtungen wie Fluidmischern und dergleichen bei Temperaturen unterhalb der Plastifiziertemperatur - üblicherweise zwischen 20 und 150 °C.

Als den Maserungseffekt erzeugendes Polymerisat können handelsübliche Produkte eingesetzt werden.

Beispiele sind:

Chloriertes Polyethylen mit einem Chloranteil von 20 bis 50
Gew.%,
Nitrilkautschuk mit 40 bis 80 Gew.% an Butadien-Struktureinheiten,
Ethylen-Vinylacetat-Copolymere mit einem Anteil von 10 bis
90 Gew.%, insbesondere 40 bis 70 Gew.% an Vinylacetat-Struktureinheiten,
sowie Pfropfpolymerisate des Vinylchlorids auf Ethylen-Vinylacetat-Copolymer mit 10 bis 90 Gew.% an Vinylacetat-Struktureinheiten, bezogen auf Ethylen-Vinylacetat-Copolymer und
40 - 90 Gew.% an Vinylchlorid-Struktureinheiten, bezogen auf
Pfropfpolymerisat.

Typische Formulierungen für den Maserungseffekt erzeugende
Polymerisate sind:

100 Gewichtsteile Polymer
0,5 bis 5 Gewichtsteile Verarbeitungshilfsstoffe
0 bis 100 Gewichtsteile Farbstoffe
0 bis 100 Gewichtsteile Pigmente.

Die Herstellung derartiger Zusammensetzungen kann durch
Mischen der einzelnen Komponenten in Vorrichtungen wie Fluidmischern und dergleichen erfolgen, bei Temperaturen unterhalb
der Plastifiziertemperatur, üblicherweise zwischen 20 und
120 °C.

Die den Maserungseffekt erzeugenden Polymerisate werden in Form
von Pulvern oder Granulaten eingesetzt.

Die erfindungsgemäßen, inhomogenen Mischungen werden durch
Mischen von 90 bis 99 Gewichtsteilen Basispolymerisat und 1
bis 10 Gewichtsteilen den Maserungseffekt erzeugendem Polymerisat, in üblichen Vorrichtungen wie Fluidmischern und dergleichen gewonnen. Die Mischtemperaturen betragen 20 bis 120 °C,
jedoch stets weniger als jene Temperatur, die zur vollständigen
Plastifizierung der Mischung führt.

Zur Erzielung eines Maserungseffektes in Formteilen müssen
die beiden Komponenten des Polymermaterials - Basispolymerisat und, den Maserungseffekt erzeugendes Polymerisat - farblich so abgestimmt werden, daß ein Farbkontrast entsteht. Es
muß mithin, bezugnehmend auf die oben angegebenen typischen
Zusammensetzungen für Basismaterial und, den Maserungseffekt
erzeugender Komponente, die Maßgabe erfüllt sein, daß die
farbgebenden Zusätze für beide Komponenten nicht völlig identisch, insbesondere nicht identisch Null sein dürfen. Zumeist enthält das, den Maserungseffekt erzeugende Polymerisat im Vergleich zum Basispolymerisat den auffälligeren farbgebenden Anteil - es kann jedoch, falls erwünscht, auch umgekehrt verfahren werden.

Zur Herstellung entsprechender Formkörper können konventionelle Techniken angewendet werden. Beispiele sind Extrudieren, Spritzgießen usw.

Naturgemäß muß, zur Erzielung eines Maserungseffektes, immer Vorsorge getroffen sein, daß die beiden Komponenten bei der Verarbeitung nicht homogen vermischt werden.

Insbesondere eignen sich hierfür Vorrichtungen wie Ein- oder Doppelschneckenpressen zur Verarbeitung der erfindungsgemäßen Massen, die eine Kompression von 1 : 1 bis 1 : 3,0 erzeugen. Die Massetemperaturen liegen bei der Verarbeitung in der Regel zwischen 160 und 230 $^\circ$C.

Nach dem erfindungsgemäßen Verfahren lassen sich beispielsweise mit Holzmaserungseffekten versehene Profile herstellen, die Schlagzugzähigkeitswerte nach DIN 53 448 von bis zu etwa 800 kJ/m$^2$ aufweisen.

Derartige Formkörper können in weiten Anwendungsbereichen mit Vorteil entsprechende Artikel aus Holz substituieren.

Die Erfindung wird nun anhand von Beispielen und Vergleichsbeispielen erläutert.

Die Zahlenangaben über die Zusammensetzung der einzelnen Komponenten beziehen sich stets, falls nicht anders angegeben, auf Gewichtsteile.

Beispiel 1

100 Teile an granuliertem Basismaterial folgender Zusammensetzung:

| | |
|---|---|
| Polyvinylchlorid | 100 |
| Pb-Compound RL 4367 WA (Additivcompound, Fa. Metallgesellschaft AG) | 4,6 |
| Verarbeitungsmittel | 1,5 |
| Füllstoff | 9,0 |
| Farben und Pigmente | 4,0 |

und 7,6 Teile Farbgranulat folgender Zusammensetzung:

| | |
|---|---|
| Ethylen-Vinylacetat-Copolymer VAE 611 (60 Gew.% Vinylacetat-Struktureinheiten, eingetragenes Warenzeichen der Fa. Wacker-Chemie) | 100 |

| | |
|---|---|
| Calziumstearat | 2,0 |
| Titandioxid | 28,0 |
| Gelb HR ) eingetragenes Warenzeichen | 21,0 |
| Rot BB ) der Fa. Hoechst | 9,0 |
| Ruß | 5,0 |

werden in einem Fluidmischer bei Temperaturen bis zu 120 $^{\circ}$C abgemischt und anschließend auf 23 $^{\circ}$C im Kühlmischer abgekühlt.

Aus der so erhaltenen Mischung wird nach üblicher Extrusionstechnik ein Profil hergestellt und nach DIN 53 448 auf Schlagzugzähigkeit getestet.

Die Schlagzugzähigkeit des Profils beträgt 484 kJ/m$^2$.

Vergleichsbeispiel 1

Es wird ein Profil gemäß Beispiel 1 hergestellt und geprüft, mit der Abänderung, daß ein Farbgranulat folgender Zusammensetzung eingesetzt wird:

| | |
|---|---|
| Polyvinylchlorid | 100 |
| Di-(2-ethylhexyl)-phthalat (DOP) | 43 |
| Calziumstearat | 2,0 |
| Titandioxid | 28,0 |
| Gelb HR | 21,0 |
| Rot BB | 9,0 |
| Ruß | 5,0 |

Das Profil weist eine Schlagzugzähigkeit von 152 kJ/m$^2$ auf.

Beispiel 2

Es wird ein Profil analog Beispiel 1 hergestellt und geprüft, mit der Abänderung, daß statt 7,6 Teilen 4,6 Teile eines Farbgranulates folgender Zusammensetzung eingesetzt wird:

| | |
|---|---|
| Ethylen-Vinylacetat-Copolymer VAE 611 | 100 |
| Calziumstearat | 2,0 |
| Ruß | 3,0 |

Das Profil weist eine Schlagzugzähigkeit von 480 kJ/m$^2$ auf.

## Vergleichsbeispiel 2

Es wird ein Profil analog Beispiel 2 hergestellt und geprüft,
mit der Abänderung, daß 4,6 Teile folgenden Farbgranulates
eingesetzt werden:

| | |
|---|---|
| Polyvinylchlorid | 100 |
| DOP | 43 |
| Calziumstearat | 2,0 |
| Ruß | 3,0 |

Das Profil weist eine Schlagzugzähigkeit von 150 kJ/m$^2$ auf.

## Beispiel 3

Es wird ein Profil gemäß Beispiel 1 hergestellt und geprüft,
mit der Abänderung, daß als Farbgranulat 7,6 Teile folgender
Zusammensetzung eingesetzt wird:

| | |
|---|---|
| Nitrilkautschuk Chemigum N8 - 2B<br>( 70 Gew.% Butadien-Struktureinheiten,<br> e.Wz der Goodyear Tyre-Rubber Company) | 100 |
| Calziumstearat | 2,0 |
| Titandioxid | 28,0 |
| Gelb HR | 21,0 |
| Rot BB | 9,0 |
| Ruß | 5,0 |

Das Profil weist eine Schlagzugzähigkeit von 245 kJ/m$^2$ auf.

## Beispiel 4

Es wird ein Profil analog Beispiel 3 hergestellt und geprüft,
mit der Abänderung, daß anstatt 7,6 Teilen 4,6 Teile eines
Farbgranulats folgender Zusammensetzung eingesetzt wird:

| | |
|---|---|
| Chemigum N8 - 2B | 100 |
| Calziumstearat | 2,0 |
| Ruß | 3,0 |

Das Profil weist eine Schlagzugzähigkeit von 245 kJ/m$^2$ auf.

<u>P a t e n t a n s p r ü c h e</u>

1. Verfahren zur Erzielung von Maserungseffekten in Formteilen aus Polymermaterial, wobei eine Mischung aus Polyvinylchlorid als Basismaterial und, den Maserungseffekt
erzeugendem Polymerisat geformt wird, d a d u r c h
g e k e n n z e i c h n e t ,  daß als den Maserungseffekt
erzeugendes Polymerisat eine Auswahl von Polymerisaten
eingesetzt wird, die chloriertes Polyethylen, Nitrilkautschuk, Ethylen-Vinylacetat-Copolymer, sowie Pfropfpolymerisat von Vinylchlorid auf Ethylen-Vinylacetat- ,
Copolymer umfaßt.

2. Verfahren nach Anspruch 1, d a d u r c h  g e k e n n -
z e i c h n e t ,  daß als den Maserungseffekt erzeugendes Polymerisat Ethylen-Vinylacetat-Copolymer eingesetzt
wird mit 10 - 90 Gew.% Anteil an Vinylacetat-Struktureinheiten.

3. Inhomogene Mischungen von teilchenförmigem Polyvinylchlorid mit dazu farblich kontrastierendem, teilchenförmigem Polymerisat, das eine Auswahl umfaßt aus der
Gruppe des chlorierten Polyethylens, des Nitrilkautschuks,
des Ethylen-Vinylacetat-Copolymers, sowie des Pfropfpolymerisats des Vinylchlorids auf Ethylen-Vinylacetat-Copolymer.

4. Mischung nach Anspruch 3,  g e k e n n z e i c h n e t
durch einen Gehalt an 1 - 10 Gew.% an farblich kontrastierendem, teilchenförmigem Polymerisat.

| Europäisches Patentamt | EUROPÄISCHER RECHERCHENBERICHT | Nummer der Anmeldung<br>EP 81 10 6495 |
|---|---|---|

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| D | DE - A - 1 963 161 (FARBWERKE HOECHST)<br>* Seite 2, unten; Ansprüche 1-3 *<br>--- | 1,4 | B 44 F 9/00<br>B 29 F 3/12<br>B 44 F 9/02 |
| | US - A - 3 906 065 (E. SCHNEIDER)<br>* Spalte 6, Zeilen 26-39 *<br>& DE - A - 2 020 758<br>--- | 1 | |
| | GB - A - 720 922 (UNION CARBIDE)<br>* Insgesamt *<br>--- | 1 | RECHERCHIERTE SACHGEBIETE (Int. Cl.³) |
| | CH - A - 423 223 (SEMPERIT)<br>* Insgesamt *<br>--- | 1 | B 44 F 9/00<br>9/02<br>B 29 F 3/12<br>B 44 F 5/00<br>C 08 J 3/20 |
| A | DE - B - 1 494 127 (I.C.I.) | | |
| AD | DE - B - 1 146 648 (FRIESKE & HOEPFNER) | | |
| AD | DE - B - 1 170 616 (H. BERSTORFF) | | |
| A | US - A - 3 769 380 (D.F. WILEY) | | KATEGORIE DER GENANNTEN DOKUMENTE |
| A | DE - A - 1 554 781 (MONTECATINI)<br>---- | | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 20-11-1981 | FRIDEN |

EPA form 1503.1 06.78